# EUROPÄISCHE PATENTSCHRIFT

(11) **EP 3 317 040 B1**
(45) Veröffentlichungstag und Bekanntmachung des Hinweises auf die Patenterteilung: **29.01.2020**
(21) Anmeldenummer: 16736803.4
(22) Anmeldetag: 22.06.2016
(51) Int. Cl.: B23K 20/10, B06B 3/00, B29C 65/08

(54) **VORRICHTUNG ZUM VERSCHWEISSEN VON BAUTEILEN MITTELS ULTRASCHALLS DURCH TORSIONSCHWINGUNGEN**
DEVICE FOR WELDING COMPONENTS BY MEANS OF ULTRASOUND BY TORSIONAL VIBRATIONS
DISPOSITIF POUR LA SOUDURE DE COMPOSANTS AU MOYEN D'ULTRASONS

(30) Priorität: 30.06.2015 WO PCT/EP2015/064889
(43) Veröffentlichungstag der Anmeldung: 09.05.2018
(73) Patentinhaber: Telsonic Holding AG, 9552 Bronschhofen (CH)
(72) Erfinder: SOLENTHALER, Peter, 9543 St. Margarethen (CH); HÜNIG, Thomas, 63868 Grosswallstadt (DE)
(74) Vertreter: Hepp Wenger Ryffel AG
(86) Internationale Anmeldenummer: PCT/EP2016/064360
(87) Internationale Veröffentlichungsnummer: WO 2017/001255

(56) Entgegenhaltungen:
- DE-A1- 10 250 741
- DE-U1-202008 007 271
- US-A- 3 602 420
- US-A1- 2003 160 084
- US-A1- 2010 078 115

## Beschreibung

Die vorliegende Erfindung betrifft eine Vorrichtung zum Verschweissen von Bauteilen mittels Ultraschalls gemäß dem Oberbegriff des Anspruchs 1 (siehe z.B. US 2010/078115 A1), einer Abstützeinrichtung zum Abstützen eines Sonotrodenkopfs gemäss den Oberbegriffen der unabhängigen Patentansprüche.

Bekannte Abstützeinrichtungen für Sonotrodenköpfe werden an einer Stelle mit minimaler Amplitude angebracht (sogenannte Nullpunktabstützung). Hierdurch kann erreicht werden, dass über die Abstützeinrichtung möglichst wenig Ultraschallenergie ausgekoppelt wird, die für den eigentlichen Schweissvorgang zur Verfügung gestellt werden soll. Auch ein ungewollter Temperaturanstieg an der Abstützeinrichtung kann hierdurch vermieden werden.

So offenbart die US 3,184,841 beispielsweise eine Torsionssonotrode, die mit Hilfe von Ultraschallwandlern zu Torsionsschwingungen angeregt werden kann. Die Arbeitsfläche der ringförmigen Schweissspitze verläuft senkrecht zur Torsionsachse. Die Sonotrode wird an einem Schwingungsknoten von einer Masse abgestützt.

Die WO 02/061895 A1 befasst sich mit dem Verbinden von elektrischen Leitern, was beispielsweise mit Torsionssonotroden oder Längsschwingern erreicht werden kann. Der Längsschwinger kann in einem Schwingungsknoten gelagert werden.

In der EP 2 261 008 A1 sind weitere Vorrichtungen und Verfahren zur Ultraschallbehandlung offenbart. Eine Sonotrode wird zu torsionalen Ultraschallschwingungen angeregt. Sie weist einen Schlitz auf, in den ein Eingriffsglied eines Ambosses eingeführt ist, so dass ein Schweissspalt für zwei zu verschweissende Kunststofffolien gebildet wird. Das Eingriffsglied weist im Bereich eines Angriffsabschnitts eine Wiegekante auf, an die eine Keilfläche anschliesst. Ein entweder am Eingriffsglied oder an einem Nutboden angeordnetes Stützsegment weist eine Kegelspitze auf, die in Richtung der Torsionsachse liegt und einen Nullpunktkontakt bildet, der beim Schweissen nicht mitschwingt.

Die in WO 2011/138404 A1 offenbarten Torsionssonotroden enthalten Vorsprünge, die im Umfangsbereich über Arbeitsflächen verfügen. Beidseits der Arbeitsflächen ist jeweils eine Ringfläche vorgesehen, welche bezüglich einer Wellenlänge einer Eigenschwingung der Torsionssonotrode auf einer Knotenlinie liegt. In einem Ausführungsbeispiel umgreift eine Stützvorrichtung diese Ringflächen. Druckkräfte werden mit Hilfe einer Druckeinrichtung erzeugt.

Im Ausführungsbeispiel der WO 2012/069413 A1 ist ein Torsionsschwinger an einer Längsposition hinter einer Sonotrode von einem Spannring umgeben, welcher ein Lager für den Torsionsschwinger bildet. Dieser Spannring ist typischerweise in einem Schwingungsknoten angeordnet.

All diese bekannten Abstützeinrichtungen haben jedoch den Nachteil, dass die Position des Schwingungsknotens von den auf den Sonotrodenkopf einwirkenden Kräften und Drehmomenten abhängt. In aller Regel kann sich ein Schwingungsknoten um mehrere Millimeter verschieben. Dies führt zu einer ungewollten Auskopplung der Ultraschallenergie und den damit verbundenen, bereits oben beschriebenen Nachteilen.

Es ist daher eine Aufgabe der vorliegenden Erfindung, eine Vorrichtung zum Verschweissen von Bauteilen mittels Ultraschalls bereitzustellen, welche die oben genannten Nachteile nicht aufweist. Insbesondere soll eine Sonotrode der Vorrichtung also derart abgestützt werden, dass es zu keiner nennenswerten Auskopplung der Ultraschallenergie kommt, und zwar unabhängig davon, welche Kräfte oder Drehmomente auf den Sonotrodenkopf einwirken.

Diese und weitere Aufgaben werden gemäss der Erfindung gelöst durch eine Vorrichtung zum Verschweissen von Bauteilen mittels Ultraschalls entsprechend dem Anspruch 1, welche eine Sonotrode mit einem Sonotrodenkopf und eine Abstützeinrichtung enthält. Der Sonotrodenkopf ist von einem Schwingungserzeuger zu Torsionsschwingungen bezüglich einer Torsionsachse anregbar. Gemäss der Erfindung ist am Sonotrodenkopf bezüglich der Torsionsachse umfangseitig wenigstens eine Schweissfläche angeordnet. Die Abstützeinrichtung stützt den Sonotrodenkopf in einem Abstützbereich ab, der einen Schwingungsknoten des Sonotrodenkopfs enthält.

Gemäss der Erfindung verlaufen der Abstützbereich und die Schweissfläche zumindest teilweise in einer gemeinsamen Ebene, die sich senkrecht zur Torsionsachse erstreckt. Diese Ausgestaltung hat den Vorteil, dass die Position des Schwingungsknotens praktisch nicht davon abhängt, welche Kräfte oder Drehmomente auf die Schweissfläche wirken. Unabhängig von diesen Kräften oder Drehmomenten entsteht also keine nennenswerte Auskoppelung der Ultraschallenergie über die Abstützeinrichtung, so dass ein grösserer Anteil der Ultraschallenergie für den eigentlichen Zweck des Verschweissens zur Verfügung steht.

Gemäß der Erfindung bildet der Abstützbereich nur einen bezüglich der Torsionsachse inneren Bereich des Sonotrodenkopfs. Da in diesem inneren Bereich die Amplitude der Torsionsschwingungen kleiner ist als in äusseren Bereichen, kann hierdurch die an der Abstützeinrichtung ausgekoppelte Ultraschallenergie nochmals reduziert werden.

Gemäss der Erfindung weist die Sonotrode eine Bohrung auf, welche den Abstützbereich im Wesentlichen senkrecht zur Torsionsachse durchdringt, und die Abstützeinrichtung enthält einen durch die Bohrung verlaufenden Stützbolzen, welcher die Sonotrode im Abstützbereich in der Bohrung abstützt. Unter einer Durchdringung "im Wesentlichen senkrecht zur Torsionsachse" wird hier und im Folgenden verstanden, dass die Bohrung den Abstützbereich unter einem Winkel von 80° bis 100° durchdringt. Bevorzugt liegt der genannte Winkel im Bereich von 85° bis 95°, noch weiter bevorzugt von 89° bis 91° und ist ganz besonders bevorzugt 90°. Denn je näher dieser Winkel bei 90° liegt, desto weniger Ultraschallenergie wird ausgekoppelt. Auf diese Weise kann besonders einfach eine Abstützung nur in einem bezüglich der Torsionsachse inneren Bereich des Sonotrodenkopfs realisiert werden, wodurch die bereits oben erläuterten Vorteile erzielt werden können. Wie sich vollkommen überraschend herausgestellt hat, werden die akustischen Eigenschaften der Sonotrode durch die sie durchdringende Bohrung und durch den hierdurch verlaufenden Stützbolzen nicht nachteilig beeinflusst. Ein solcher Stützbolzen hat den Vorteil, dass die Sonotrode präzise eingesetzt werden kann, insbesondere, wenn die Sonotrode umpositioniert oder ausgetauscht wird.

Es ist denkbar und liegt im Rahmen der Erfindung, dass die Sonotrode und der Stützbolzen miteinander einstückig ausgebildet sind. Vorteilhafterweise sind jedoch die Sonotrode und die Abstützachse zwei separate Bauelemente, die zusammengefügt wurden. Der Stützbolzen kann die Sonotrode im Abstützbereich in der Bohrung beispielsweise durch Übergangspassung, Schrumpfen oder Einpressen abstützen.

Mit besonderem Vorteil schneidet der Stützbolzen die Torsionsachse. Auf diese Weise kann der Stützbolzen besonders effektiv den bezüglich der Torsionsachse inneren Bereich des Sonotrodenkopfs abstützen.

Um eine Abstützung nur in einem bezüglich der Torsionsachse inneren Bereich des Sonotrodenkopfs zu ermöglichen, kann sich die Bohrung in Richtung des Abstützbereichs verjüngen. Diese Formulierung umfasst sowohl konische Bereiche der Bohrung als auch Ausführungsformen, bei denen die Bohrung sowohl im Abstützbereich als auch in zwei gegenüberliegenden Mündungsabschnitten, in denen die Bohrung aus der Sonotrode ausmündet, jeweils zylindrisch sind, wobei jedoch die Bohrung im Abstützbereich einen ersten Innendurchmesser aufweist, der kleiner ist als ein zweiter Innendurchmesser der Bohrung in den Mündungsabschnitten. Derartige stufenförmige Bereiche sind leichter herzustellen als konische Bereiche.

Alternativ oder zusätzlich kann sich der Stützbolzen in Richtung des Abstützbereichs erweitern. Analog umfasst diese Formulierung auch Stützbolzen mit einem mittleren Bereich mit einem ersten Aussendurchmesser und zwei Endbereichen mit zweiten Aussendurchmessern, die kleiner sind als der erste Aussendurchmesser. Je länger der Abstützbereich ist, desto stabiler ist die Abstützung. Andererseits entsteht mit zunehmender Länge des Abstützbereichs aber auch eine zunehmende und unerwünschte Dämpfung der Torsionsschwingungen. In der Praxis hat es sich als vorteilhaft erwiesen, wenn die Länge des Abstützbereichs entlang des Stützbolzens zwischen 10 % und 30 %, bevorzugt zwischen 20 % und 25 % der Ausdehnung des Sonotrodenkopfs entlang des Stützbolzens beträgt.

In weiteren vorteilhaften Ausführungsformen kann der Stützbolzen zwei gegenüberliegende Enden aufweisen, die in jeweils einer Lageröffnung aufgenommen sind. Auf diese Weise können Kräfte und Drehmomente, die beim Verschweissen entstehen, auf die Lagerung übertragen werden. Jede der Lageröffnungen kann als Öffnung einer jeweils einstückigen Lagerbuchse ausgebildet sein. Alternativ kann jede der Lageröffnungen durch zwei Lagerteile gebildet sein, beispielsweise durch einen Lagerblock und eine Klemmpratze. Durch Lösen solcher Klemmpratzen vom Lagerblock ist der Stützbolzen besonders einfach zugänglich, beispielsweise um die Sonotrode in eine andere Position zu überführen, in der eine andere Schweissfläche zum Verschweissen eingesetzt werden kann.

Besonders vorteilhaft enthält die Vorrichtung einen insbesondere einstückigen Lagerblock, welcher die beiden genannten Lageröffnungen zumindest teilweise bildet. Ein derartiger einstückiger Lagerblock ist baulich besonders einfach. Alternativ dazu ist es aber auch denkbar und liegt ebenso im Rahmen der Erfindung, dass die beiden Lagerbuchsen nicht einstückig miteinander ausgebildet sind.

Die Vorrichtung kann weiterhin eine Druckvorrichtung zur Erzeugung von im Wesentlichen senkrecht zur Torsionsachse wirkenden Kräften auf den Lagerblock enthalten. Unter "im Wesentlichen senkrecht zur Torsionsachse wirkenden Kräfte" wird hier und im Folgenden verstanden, dass der Winkel zwischen Kräften und Torsionsachse im Bereich von70° bis 110°, bevorzugt von 80° bis 100°, besonders bevorzugt von 85° bis 95° liegt und ist ganz besonders bevorzugt 90°. Auf diese Weise ist die Schweissfläche an ein mit einem zweiten Bauteil zu verbindendes erstes Bauteil andrückbar. Aufgrund der erfindungsgemässen Abstützeinrichtung bewirken die von der Druckvorrichtung erzeugten Kräfte keine nennenswerte Verschiebung der Lage des Schwingungsknotens.

Der Stützbolzen kann als Hohlbolzen ausgebildet sein oder auch aus Vollmaterial bestehen. Ein Hohlbolzen hat den Vorteil einer besseren Schwingungsdämpfung, während ein aus einem Vollmaterial bestehender Bolzen mechanisch stabiler ist.

In einem Aspekt der Erfindung betrifft die Erfindung die Vorrichtung zum Verschweissen von Bauteilen mit einer Abstützeinrichtung, welche den Sonotrodenkopf in einem Abstützbereich abstützt, der einen Schwingungsknoten des Sonotrodenkopfs enthält.

Der Schwingungserzeuger kann zur Anregung des Sonotrodenkopfes zu Torsionsschwingungen bezüglich einer Torsionsachse ausgebildet sein. Dabei kann mindestens eine Schweissfläche bezüglich der Torsionsachse umfangsseitig und/oder mindestens eine Schweissfläche an einer zur Torsionsachse senkrechten Endfläche angeordnet sein. Alternativ kann der Schwingungserzeuger aber auch zur Anregung des Sonotrodenkopfes zu Längsschwingungen ausgebildet sein.

In diesem Aspekt der Erfindung weist die Vorrichtung eine Temperiereinrichtung zur Temperierung, insbesondere zum Kühlen oder zum Heizen, des Sonotrodenkopfs auf. Die Temperiereinrichtung enthält mindestens eine durch die Abstützeinrichtung geführte Temperierzuführung für ein Temperiermedium und mindestens ein mit der Temperierzuführung wirkverbundenes Temperierelement, welches bevorzugt im Bereich einer Schweissfläche des Sonotrodenkopfs angeordnet ist. Wie weiter unten erläutert wird, kann die Wirkverbindung beispielsweise in einer Fluidverbindung oder einer elektrischen Verbindung bestehen. Da die Temperierzuführung in der Abstützeinrichtung angeordnet ist, welche den Sonotrodenkopf in einem Abstützbereich abstützt, der einen Schwingungsknoten des Sonotrodenkopfs enthält, wird die Temperierzuführung praktisch nicht von den Ultraschallschwingungen beeinträchtigt. Eine Kühlung des Sonotrodenkopfs im Bereich einer Schweissfläche ist besonders effektiv, da dort beim Schweissen die meiste Wärme entsteht. Auch ein Heizen des Sonotrodenkopfs im Bereich einer Schweissfläche hat sich in einigen Ausführungen als vorteilhaft erwiesen. Weiterhin hat das Temperieren der Sonotrodenkopfs den Vorteil, dass die Temperatur und damit auch die Resonanzfrequenz vergleichsweise konstant gehalten werden kann.

In einigen Ausführungsbeispielen enthält die Temperierzuführung mindestens einen Zuführkanal, durch den ein Temperierfluid in den Sonotrodenkopf einführbar oder aus dem Sonotrodenkopf ausführbar ist. In diesen Ausführungsbeispielen bildet das Temperierfluid das Temperiermedium. Das Temperierfluid, insbesondere ein Kühlfluid oder ein Heizfluid, kann beispielsweise ein Gas oder eine Flüssigkeit sein, wie etwa Wasser. Der mindestens eine Zuführkanal kann an Öffnungen aus der Abstützeinrichtung ausmünden. Durch eine erste Öffnung kann das Temperierfluid eingeführt werden, und aus einer zweiten Öffnung kann es wieder ausgeführt werden. Das Temperierelement kann mindestens einen Temperierkanal für das Temperierfluid enthalten, welcher mit dem Zuführkanal fluidverbunden ist.

Alternativ kann das Temperiermedium ein elektrischer Strom sein. Dieser kann durch eine in der Abstützeinrichtung angeordnete elektrische Leitung in den Sonotrodenkopf eingeführt wird, wobei die elektrische Leitung die Temperierzuführung bildet. Das Temperierelement kann ein mit der elektrischen Leitung elektrisch verbundenes elektrisches Temperierelement sein. Das elektrische Temperierelement kann beispielsweise als Peltier-Element ausgebildet sein, um den Sonotrodenkopf zu kühlen oder zu heizen, und/oder als Heizdraht, um den Sonotrodenkopf zu heizen.

In einer möglichen Ausführungsform enthält die Abstützeinrichtung einen wie oben beschriebenen Stützbolzen, der als Hohlbolzen ausgebildet ist und die Temperierzuführung mit einem darin enthaltenen Zuführkanal für ein Temperierfluid bildet. Der Zuführkanal kann beispielsweise im Hohlbolzen zentriert angeordnet und zylindrisch ausgebildet sein. Der mindestens eine Zuführkanal kann an Öffnungen ausmünden, die an gegenüberliegenden Enden des Stützbolzens angeordnet oder auch am gleichen Ende des Stützbolzens ausmünden können. Wenn gemäss dem ersten Aspekt der Erfindung der Abstützbereich und die Schweissfläche zumindest teilweise in einer gemeinsamen Ebene verlaufen, die sich senkrecht zur Torsionsachse erstreckt, so können der mindestens eine Zuführkanal und der Temperierkanal durch eine gemeinsame Bohrung im Stützbolzen gebildet sein, die durchgängig zylindrisch sein kann.

In anderen Ausführungsformen kann durch den Stützbolzen eine elektrische Leitung geführt sein, um beispielsweise ein im Sonotrodenkopf angeordnetes Peltier-Element mit Strom zu versorgen.

Vom ersten Aspekt der Erfindung sind auch Vorrichtungen erfasst, bei denen die Sonotrode im Abstützbereich auf andere Weise als durch eine Bohrung und einen Stützbolzen abgestützt ist.

Der Sonotrodenkopf kann mindestens einen, bevorzugt mehrere bezüglich der Torsionsachse radiale Vorsprünge aufweisen, an deren Enden jeweils eine Schweissfläche gebildet ist. Mit Hilfe solcher radialer Vorsprünge können an den Schweissflächen grosse Torsionsschwingungsamplituden erreicht werden, ohne dass der Sonotrodenkopf insgesamt einen grösseren Radius haben muss.

Weiterhin ist es von Vorteil, wenn der Sonotrodenkopf genau zwei bezüglich der Torsionsachse radiale und einander gegenüberliegende Vorsprünge aufweist, an deren Enden jeweils eine Schweissfläche gebildet ist, wobei der Stützbolzen im Wesentlichen senkrecht zu einer Verbindungslinie verläuft, die die beiden Schweissflächen miteinander verbindet. Unter einem Verlauf "im Wesentlichen senkrecht" wird hier verstanden, dass der Winkel zwischen Stützbolzen und Verbindungslinie im Bereich von 70° bis 110°, bevorzugt von 80° bis 100°, besonders bevorzugt von 85° bis 95° liegt und ganz besonders bevorzugt 90° ist. Ein derartiger im Wesentlichen senkrechter Verlauf sorgt für eine noch bessere Übertragung von Kräften und Drehmomenten durch die Abstützeinrichtung.

Im Folgenden wird die Erfindung anhand von mehreren Ausführungsbeispielen und Zeichnungen im Detail erläutert. Dabei zeigen
- Figur 1a:: eine schematische Darstellung einer ersten erfindungsgemässen Vorrichtung in einer perspektivischen Ansicht;
- Figur 1b:: die Vorrichtung gemäss Figur 1a in einer Schnittansicht;
- Figur 2a:: eine zweite erfindungsgemässe Vorrichtung in einer perspektivischen Ansicht;
- Figur 2b:: die Vorrichtung gemäss Figur 2a in einer ersten Schnittansicht;
- Figur 2c:: die Vorrichtung gemäss Figuren 2a und 2b in einer zweiten Schnittansicht;
- Figur 2d:: ein Schnittansicht der Sonotrode der Vorrichtung gemäss Figuren 2a bis 2c;
- Figur 2e:: eine perspektivische Ansicht des Stützbolzens der Vorrichtung gemäss Figuren 2a bis 2d;
- Figur 3:: eine dritte erfindungsgemässe Vorrichtung in einer Schnittansicht;
- Figur 4:: eine perspektivische Ansicht einer vierten erfindungsgemässen Vorrichtung mit einer an einer Endfläche eines Sonotrodenkopfs angeordneten Schweissfläche.

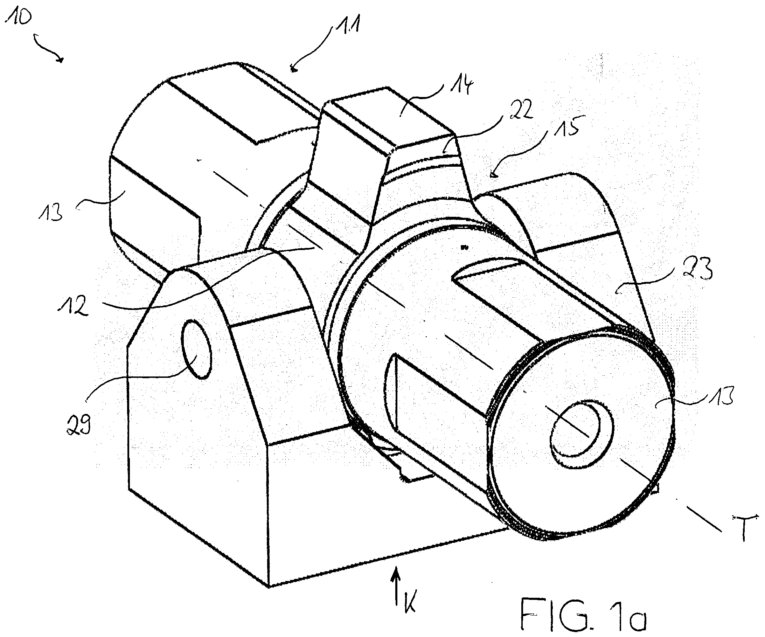

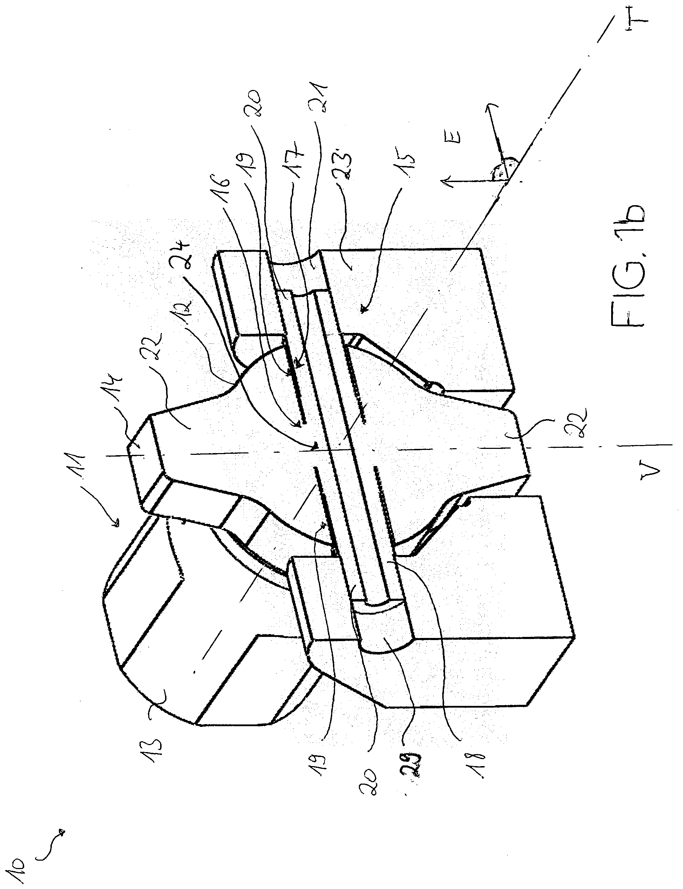

Die in der schematischen Figur 1a dargestellte Vorrichtung 10 zum Verschweissen von Bauteilen mittels Ultraschalls enthält eine Sonotrode 11 mit zwei Endstücken 13 und einem dazwischen angeordneten Sonotrodenkopf 12, welcher mit Hilfe von hier nicht dargestellten Schwingungserzeugern über die Endstücke 13 zu Torsionsschwingungen bezüglich einer Torsionsachse T anregbar ist. Der Sonotrodenkopf 12 weist zwei bezüglich der Torsionsachse T radiale und einander gegenüberliegende Vorsprünge 22 auf. An den Enden der Vorsprünge 22 ist jeweils eine Schweissfläche 14 gebildet, mit der ein erstes Bauteil durch Verschweissen mit einem zweiten Bauteil verbunden werden kann. Beide Schweissflächen 14 sind also bezüglich der Torsionsachse T umfangseitig angeordnet. Die Vorrichtung 10 enthält ferner eine Abstützeinrichtung 15, welche den Sonotrodenkopf 12 in einem Abstützbereich abstützt. Dieser Abstützbereich, der in Figur 1b noch detaillierter dargestellt ist, enthält einen Schwingungsknoten des Sonotrodenkopf 12.

Die Schnittansicht gemäss Figur 1b zeigt Details der Abstützeinrichtung 15. Die Sonotrode 11 weist eine zylindrische Bohrung 17 auf, welche den Abstützbereich 16 senkrecht zur Torsionsachse T und auch senkrecht zu einer die beiden Schweissflächen 14 miteinander verbindenden Verbindungslinie V durchdringt. Die Abstützeinrichtung 15 enthält ferner und gemäß der Erfindung einen durch die Bohrung 17 verlaufenden Stützbolzen 18, dessen mittlerer Bereich 24 die Sonotrode 11 im Abstützbereich 16 in der Bohrung 17 abstützt. Der Stützbolzen 18 erweitert sich in Richtung seines mittleren Bereichs 24. Im hier dargestellten Ausführungsbeispiel beträgt die Länge des Abstützbereichs 16 entlang des Stützbolzens 18 etwa 20 % der Ausdehnung des Sonotrodenkopfs 12 entlang des Stützbolzens 18. Der Stützbolzen 18 ist durch Einpressen in der Bohrung 17 in der Sonotrode 11 gehalten. Dies kann beispielsweise durch ein Kaltschrumpfen erreicht werden, bei dem der Stützbolzen 18 durch Abkühlen geschrumpft wird und dann durch die Lageröffnungen 29 hindurch in die Bohrung 17 eingeführt wird. Beim anschliessenden Wiedererwärmen wird der Stützbolzen 18 in der Bohrung eingepresst.

Auf diese Weise wird die Sonotrode 11 gemäß der Erfindung nur in einem bezüglich der Torsionsachse T inneren Bereich des Sonotrodenkopf 12 abgestützt. Mit anderen Worten bildet der Abstützbereich 16 nur einen bezüglich der Torsionsachse T inneren Bereich des Sonotrodenkopfs 12. Der Abstützbereich 16 und die Schweissfläche 14 verlaufen in einer gemeinsamen Ebene E, die sich senkrecht zur Torsionsachse T erstreckt.

Durch diese erfindungsgemässe Ausbildung hängt die Position des Schwingungsknotens praktisch nicht davon ab, welche Kräfte oder Drehmomente auf die Schweissflächen 14 wirken. Unabhängig von diesen Kräften oder Drehmomenten entsteht also keine nennenswerte Auskopplung der Ultraschallenergie über die Abstützeinrichtung 15, sodass ein grösserer Anteil der Ultraschallenergie für den eigentlichen Zweck des Verschweissens zur Verfügung steht. Der Stützbolzen 18 ist in diesem Ausführungsbeispiel als Hohlbolzen 18 ausgebildet. Alternativ kann der Stützbolzen 18 aber auch aus Vollmaterial bestehen.

Der Stützbolzen 18 weist zwei gegenüberliegende Enden 20 auf, die in jeweils einer Lageröffnung 29 einer Lagerbuchse 21 eines gemeinsamen, einstückigen Lagerblocks 23 aufgenommen sind. Auf diese Weise können Kräfte und Drehmomente auf den Lagerblock übertragen werden. Der Stützbolzen 18 erlaubt eine besonders präzise Positionierung des Sonotrodenkopfs 12.

Die Vorrichtung 10 kann ferner eine hier nicht dargestellte Druckvorrichtung zur Erzeugung von senkrecht zur Torsionsachse T wirkenden Kräften K auf den Lagerblock 23 enthalten. Auf diese Weise ist eine der Schweissflächen 14 an ein erstes Bauteil andrückbar, welches mit einem zweiten Bauteil zu verbinden ist.

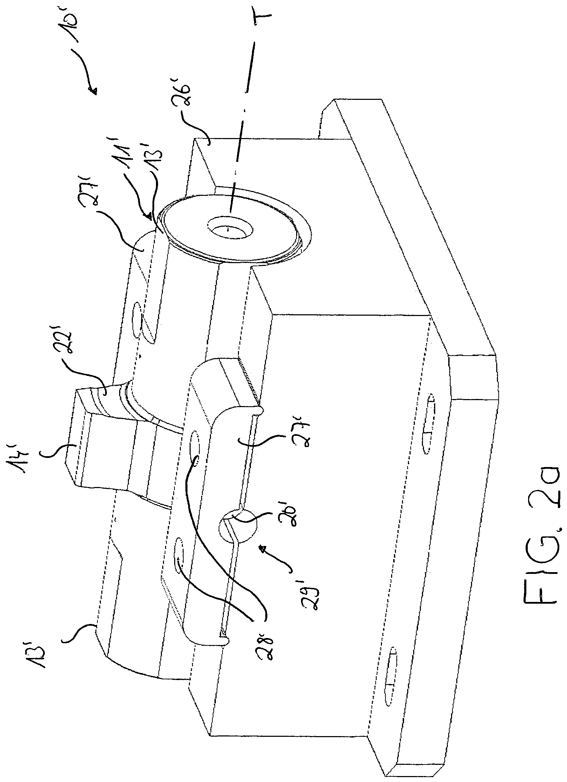

Die Figuren 2a bis 2e zeigen eine zweite erfindungsgemässe Vorrichtung 10' zum Verschweissen von Bauteilen mittels Ultraschalls.

Gemäss Figur 2a enthält die Vorrichtung 10' einen Lagerblock 26' mit einer rinnenförmigen Ausnehmung, in der eine Sonotrode 11' aufgenommen ist. Auch diese Sonotrode 11' enthält zwei Endstücke 13' mit einem dazwischen angeordneten Sonotrodenkopf 12' mit zwei Vorsprüngen 22', an deren Enden jeweils eine Schweissfläche 14' vorhanden ist. Über die Endstücke 13' ist der Sonotrodenkopf 12' mittels zweier nicht dargestellter Schwingungserzeuger zu Torsionsschwingungen bezüglich einer Torsionsachse T anregbar. Zwei gegenüberliegende Enden 20' eines Stützbolzens 18' sind mit Hilfe von Klemmpratzen 27' am Lagerblock 26' befestigt. Die Klemmpratzen 27' sind mittels Schrauben am Lagerblock 26' fixiert, die in Schraubenöffnungen 28' eingesetzt sind. Durch Lösen der Klemmpratzen 27' vom Lagerblock 26' ist der Stützbolzen 18' besonders einfach zugänglich. Mittels einer hier nicht dargestellten Druckvorrichtung, beispielsweise eines Pneumatikzylinders, können senkrecht zur Torsionsachse T wirkende Kräfte K auf den Lagerblock 26' ausgeübt werden, wodurch die Schweissfläche 14' an ein mit einem zweiten Bauteil zu verbindendes erstes Bauteil andrückbar ist.

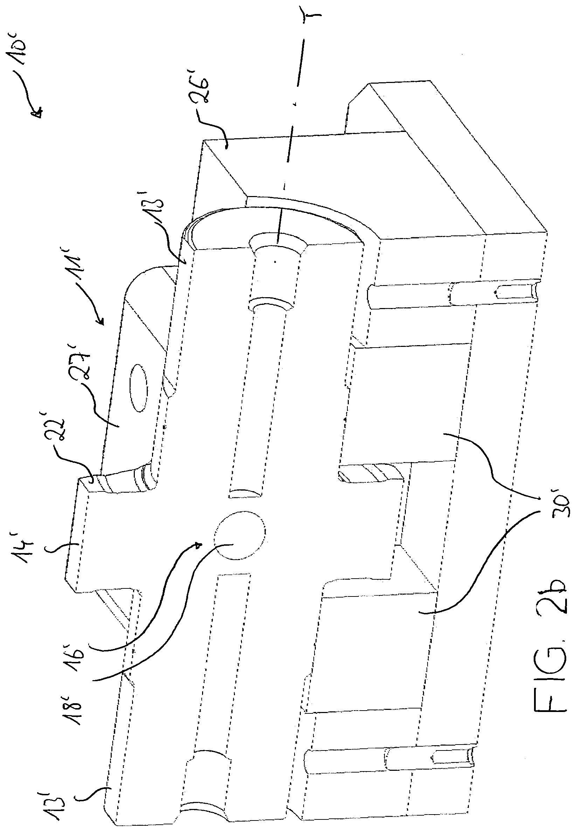

Wie in der Schnittansicht gemäss Figur 2b zu erkennen ist, enthält die Vorrichtung 10' zwei Abstützungen 30', mit denen die Endstücke 13' der Sonotrode 11' gehalten werden. Diese beiden Abstützungen 30' können beispielsweise aus Hartgewebeplatten bestehen. Sie enthalten ebenfalls eine rinnenförmige Vertiefung zum Abstützen der Endstücke 13'. Mit Hilfe der Abstützungen 30' kann die Position der Sonotrode 11' besonders präzise eingestellt werden.

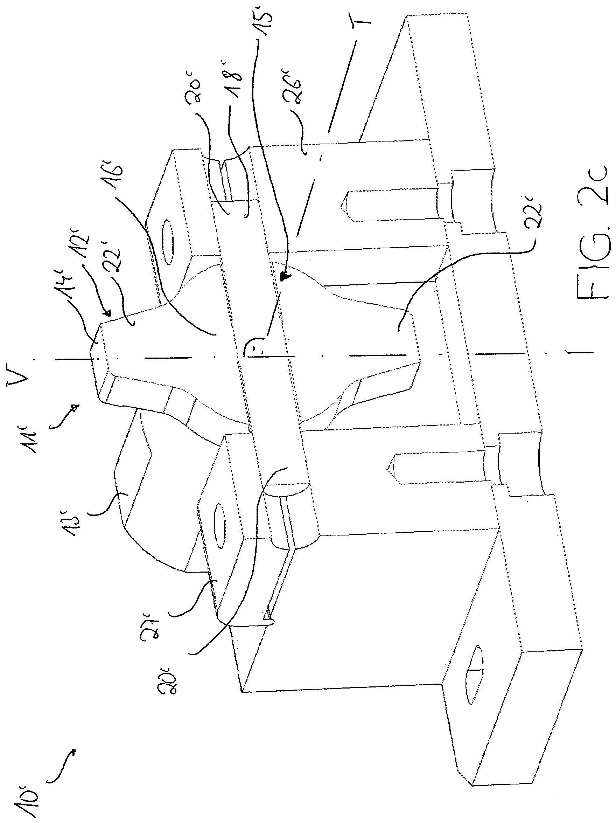

Wie der Schnittansicht in Figur 2c zu entnehmen ist, weist die Sonotrode 11' eine Bohrung 17' auf, welche die Torsionsachse T schneidet und dabei den Sonotrodenkopf 12' senkrecht zur Torsionsachse T und auch senkrecht zu einer die beiden Vorsprünge 22' verbindenden Verbindungslinie V durchdringt. In die Bohrung 17' ist ein Stützbolzen 18' eingesetzt, welcher die Sonotrode 11' in einem Abstützbereich 16' in der Bohrung 17' abstützt. Der Stützbolzen 18' ist dabei durch eine Übergangspassung gehalten, so dass er bei Bedarf ausgetauscht werden kann, beispielsweise wenn er verschlissen, verbogen oder gebrochen ist. Im Abstützbereich 16' liegt ein Schwingungsknoten des Sonotrodenkopfs 12' vor.

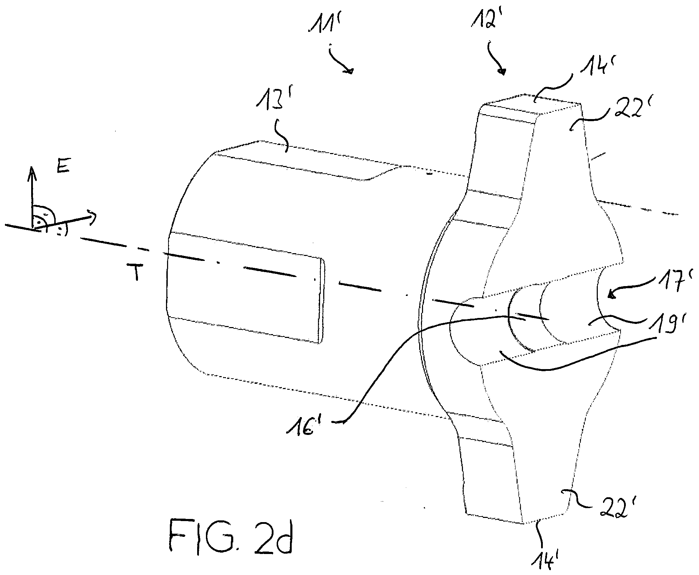

Figur 2d zeigt eine detaillierte perspektivische Schnittansicht des Sonotrodenkopfs 12'. Wie hier deutlich zu erkennen ist, weist die Bohrung 17' im Abstützbereich 16' einen ersten Innendurchmesser auf, und in zwei gegenüberliegenden Mündungsabschnitten 19' weist sie einen zweiten Innendurchmesser auf, der grösser ist als der ersten Innendurchmesser. Die Bohrung 17' verjüngt sich also in Richtung des Abstützbereichs 16'.

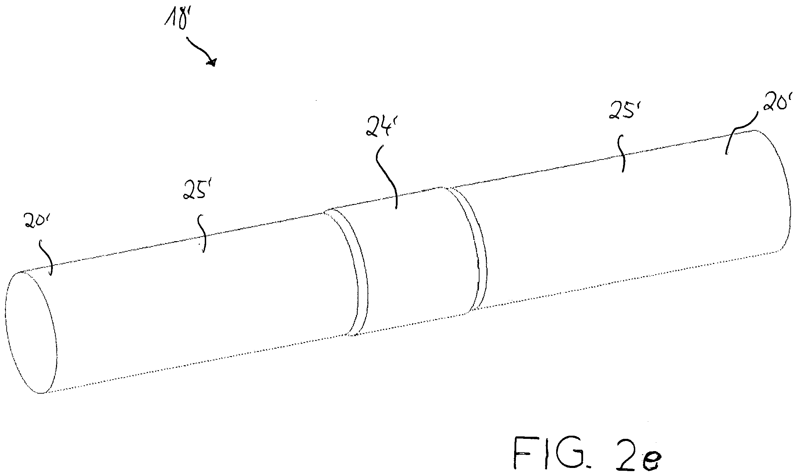

In Figur 2e ist der Stützbolzen 18' im Detail dargestellt. Im Gegensatz zum Stützbolzen 18 des ersten Ausführungsbeispiels besteht dieser Stützbolzen 18' aus einem Vollmaterial. Der Stützbolzen 18' enthält einen mittleren Bereich 24' mit einem ersten Aussendurchmesser und zwei gegenüberliegende Endbereiche 25' mit einem zweiten Aussendurchmesser, der kleiner ist als der erste Aussendurchmesser. Der Stützbolzen 18' erweitert sich also in Richtung des mittleren Bereichs, in dem er den Sonotrodenkopf 12' abstützt.

Die Länge des Abstützbereichs 16' entlang des Stützbolzens 18' beträgt etwa 25 % der Ausdehnung des Sonotrodenkopfs 12' entlang des Stützbolzens 18'.

Insgesamt wird hierdurch der Sonotrodenkopf 12' nur in einem bezüglich der Torsionsachse T inneren Bereich des Sonotrodenkopfs 12' abgestützt. Weiterhin verlaufen der Abstützbereich 16' und die beiden Schweissflächen 14' in einer gemeinsamen Ebene E, die sich senkrecht zur Torsionsachse T erstreckt. Diese erfindungsgemässe Ausbildung hat die bereits oben erläuterten Vorteile.

Um die in den Figuren 2a bis 2c unten dargestellte Schweissfläche 14' verwenden zu können, können zunächst die Klemmpratzen 27' vom Lagerblock 26' gelöst werden. Aufgrund der Zentrierung der Bohrung 17' und des Stützbolzens 18' und aufgrund der insgesamt symmetrischen Anordnung kann die Sonotrode 11' dann einfach zusammen mit dem Stützbolzen 18' um 180° um die Torsionsachse T gedreht werden, so dass die Enden 20' wieder in den Lageröffnungen 29' aufgenommen werden. Anschliessend können die Klemmpratzen 27' wieder am Lagerblock 26' befestigt werden. Aufgrund des Stützbolzens 18' ist diese Positionierung äusserst präzise.

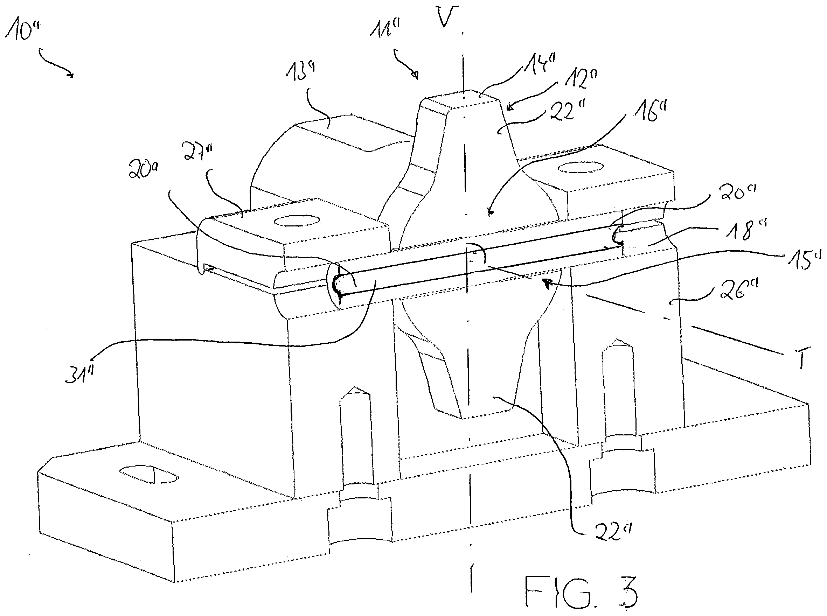

Bei der in Figur 3 dargestellten dritten erfindungsgemässen Vorrichtung 10" ist gegenüber der in den Figuren 2a bis 2e gezeigten Vorrichtung 10' der Stützbolzen als Hohlbolzen 18" ausgeführt. Er weist einen zentrierten und durchgängig zylindrischen Kanal 31" auf, durch den ein Temperierfluid, insbesondere ein Kühlmedium oder ein Heizmedium, beispielsweise Wasser, in den Sonotrodenkopf 12" ein-, hindurch- und wieder ausführbar ist. Auf diese Weise kann eine Temperierung, insbesondere ein Kühlen oder ein Heizen, des Sonotrodenkopfs 12" im Bereich der Schweissflächen 14" erreicht werden. Der Kanal 31" mündet an Öffnungen 32", 33", die an gegenüberliegenden Enden 20" des Stützbolzens 18" angeordnet sind, aus. Durch eine erste Öffnung 32" kann das Temperierfluid eingeführt werden, und aus einer zweiten Öffnung 33" kann es wieder ausgeführt werden. Der Kanal 31" bildet also zugleich Zuführkanäle zum Einführen und Ausführen des Temperierfluids und einen Temperierkanal zum Temperieren. Diese Ausführungsform erlaubt bei Verwendung eines Kühlmediums eine Kühlung der Sonotrode 11" im Bereich der Schweissflächen 14", an denen beim Schweissen die meiste Wärme entsteht.

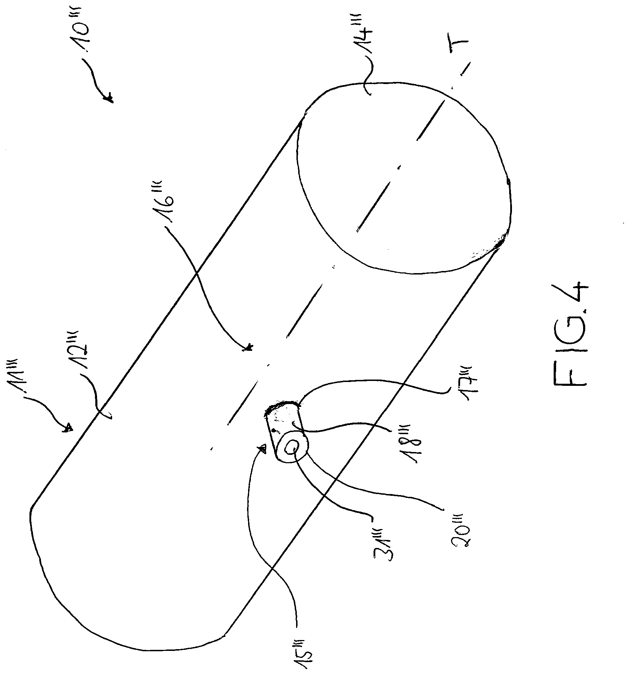

Figur 4 zeigt schematisch ein viertes erfindungsgemässes Ausführungsbeispiel, bei dem eine Schweissfläche 14''' an einer Endfläche des Sonotrodenkopfs 12''' angeordnet ist. Auch hier ist ein Stützbolzen 18''' vorgesehen, der die Sonotrode 11''' in einem Abstützbereich 16''' in einer Bohrung 17''' abstützt. Die Enden 20''' des Stützbolzens 18''' werden in zwei hier nicht dargestellten Lageröffnungen gehalten. Der Stützbolzen 18''' enthält einen Zuführkanal 31''', durch den ein Temperierfluid in den Sonotrodenkopf 12''' einführbar ist. Im Inneren des Sonotrodenkopfs 12''' sind im Bereich der Schweissfläche 14''' hier ebenfalls nicht dargestellte Temperierkanäle vorgesehen, die mit dem Zuführkanal 31''' fluidverbunden sind. Auf diese Weise kann der Sonotrodenkopf 11''' im Bereich der Schweissfläche 14''' gekühlt werden.

Der Sonotrodenkopf 12''' gemäss Figur 4 kann zu Torsionsschwingungen bezüglich einer Torsionsachse T oder zu Längsschwingungen anregbar sein, wobei der Abstützbereich 16''' einen torsionalen bzw. longitudinalen Schwingungsknoten des Sonotrodenkopfs 12''' enthält. Aufgrund der Anordnung des Stützbolzens 18''' in diesem Bereich wird die Zuführung des Temperierfluids nicht beeinträchtigt.

## Patentansprüche

1. Vorrichtung (10; 10'; 10") zum Verschweissen von Bauteilen mittels Ultraschalls, umfassend
- eine Sonotrode (11; 11'; 11") mit einem Sonotrodenkopf (12; 12'; 12"), welcher von einem Schwingungserzeuger zu Torsionsschwingungen bezüglich einer Torsionsachse (T) anregbar ist, wobei am Sonotrodenkopf (12; 12'; 12") bezüglich der Torsionsachse (T) umfangsseitig wenigstens eine Schweissfläche (14; 14'; 14") angeordnet ist,
- eine Abstützeinrichtung (15; 15'; 15"), welche den Sonotrodenkopf (11; 11'; 11") in einem Abstützbereich (16; 16'; 16") abstützt, der einen Schwingungsknoten des Sonotrodenkopfs (12; 12'; 12") enthält,
**dadurch gekennzeichnet, dass**
- die Sonotrode (11; 11'; 11"; 11''') eine Bohrung (17; 17'; 17"; 17''') aufweist, welche den Abstützbereich (16; 16'; 16"; 16''') im Wesentlichen senkrecht zur Torsionsachse (T) durchdringt,
- die Abstützeinrichtung (15; 15'; 15"; 15''') einen durch die Bohrung (17; 17'; 17"; 17''') verlaufenden Stützbolzen (18; 18'; 18"; 18''') enthält, welcher die Sonotrode (11; 11'; 11", 11''') im Abstützbereich (16; 16'; 16"; 16''') in der Bohrung (17; 17'; 17"; 17''') abstützt,
- der Abstützbereich (16; 16'; 16") und die Schweissfläche (14; 14'; 14") zumindest teilweise in einer gemeinsamen Ebene (E) verlaufen, die sich senkrecht zur Torsionsachse (T) erstreckt, und
- der Abstützbereich (16; 16'; 16") nur einen bezüglich der Torsionsachse (T) inneren Bereich des Sonotrodenkopfs (12; 12'; 12") bildet.

2. Vorrichtung (10; 10'; 10"; 10''') gemäss Anspruch 1,
**dadurch gekennzeichnet, dass**
der Stützbolzen (18; 18'; 18"; 18''') die Sonotrode (11; 11'; 11"; 11''') im Abstützbereich (16; 16'; 16"; 16''') in der Bohrung (17; 17'; 17"; 17''') durch Übergangspassung, Schrumpfen oder Einpressen abstützt.

3. Vorrichtung (10; 10'; 10"; 10''') gemäss einem der Ansprüche 1 und 2,
**dadurch gekennzeichnet, dass**
der Stützbolzen (18; 18'; 18"; 18''') die Torsionsachse (T) schneidet.

4. Vorrichtung (10; 10'; 10") gemäss einem der Ansprüche 1 bis 3,
**dadurch gekennzeichnet, dass**
sich die Bohrung (17; 17'; 17") in Richtung des Abstützbereichs (16; 16'; 16") verjüngt.

5. Vorrichtung (10; 10'; 10") gemäss einem der Ansprüche 1 bis 4,
**dadurch gekennzeichnet, dass**
sich der Stützbolzen (18; 18'; 18") in Richtung eines mittleren Bereichs (24; 24'; 24") erweitert, in dem der Stützbolzen (18; 18'; 18") den Sonotrodenkopf (11; 11'; 11") abstützt.

6. Vorrichtung (10; 10', 10") gemäss einem der Ansprüche 1 bis 5,
**dadurch gekennzeichnet, dass**
die Länge des Abstützbereichs (16; 16'; 16") entlang des Stützbolzens (18; 18'; 18") zwischen 10 % und 30 %, bevorzugt zwischen 20 % und 25 % der Ausdehnung des Sonotrodenkopfs (12; 12'; 12") entlang des Stützbolzens (18; 18'; 18") beträgt.

7. Vorrichtung (10; 10'; 10") gemäss einem der Ansprüche 1 bis 6,
**dadurch gekennzeichnet, dass**
der Stützbolzen (18; 18'; 18") zwei gegenüberliegenden Enden (20; 20'; 20") aufweist, die in jeweils einer Lageröffnung (29; 29'; 29") aufgenommen sind.

8. Vorrichtung (10; 10'; 10") gemäss Anspruch 7,
**dadurch gekennzeichnet, dass**
sie einen insbesondere einstückigen Lagerblock (23; 26'; 26") enthält, welcher die beiden Lageröffnungen (29; 29'; 29") zumindest teilweise bildet.

9. Vorrichtung (10; 10'; 10") gemäss Anspruch 8,
**dadurch gekennzeichnet, dass**
sie eine Druckvorrichtung zur Erzeugung von im Wesentlichen senkrecht zur Torsionsachse (T) wirkenden Kräften (K) auf den Lagerblock (23; 26'; 26") enthält, wodurch die Schweissfläche (14; 14'; 14") an ein mit einem zweiten Bauteil zu verbindendes erstes Bauteil andrückbar ist.

10. Vorrichtung (10"; 10''') gemäss einem vorangehenden Ansprüche,
**dadurch gekennzeichnet, dass**
die Abstützeinrichtung (15"; 15''') eine Temperiereinrichtung zur Temperierung, insbesondere zum Kühlen oder zum Heizen, des Sonotrodenkopfs (12", 12''') aufweist, wobei die Temperiereinrichtung mindestens eine durch die Abstützeinrichtung (15"; 15''') geführte Temperierzuführung für ein Temperiermedium und mindestens ein mit der Temperierzuführung wirkverbundenes Temperierelement enthält, welches bevorzugt im Bereich einer Schweissfläche (14"; 14''') des Sonotrodenkopfs (12", 12''') angeordnet ist.

11. Vorrichtung (10"; 10''') gemäss Anspruch 10,
**dadurch gekennzeichnet, dass**
die Temperierzuführung mindestens einen Zuführkanal (31"; 31''') enthält, durch den ein Temperierfluid in den Sonotrodenkopf (12", 12''') einführbar oder aus dem Sonotrodenkopf (12", 12''') ausführbar ist, und das Temperierelement mindestens einen Temperierkanal für das Temperierfluid enthält, welcher mit dem Zuführkanal (31"; 31''') fluidverbunden ist.

12. Vorrichtung (10"; 10''') gemäss Anspruch 11,
**dadurch gekennzeichnet, dass**
der Stützbolzen (18"; 18''') den Zuführkanal (31"; 31''') aufweist und der Zuführkanal (31"; 31''') an Öffnungen (32", 33") ausmündet, die an gegenüberliegenden Enden (20"; 20''') des Stützbolzens (18"; 18''') angeordnet sind.

13. Vorrichtung (10; 10'; 10") gemäss einem der vorangehenden Ansprüche,
**dadurch gekennzeichnet, dass**
der Sonotrodenkopf (12; 12'; 12") von einem Schwingungserzeuger zu Torsionsschwingungen bezüglich einer Torsionsachse (T) anregbar ist und der Sonotrodenkopf (12; 12'; 12") mindestens einen, bevorzugt mehrere bezüglich der Torsionsachse (T) radiale Vorsprünge (22; 22'; 22") aufweist, an deren Enden jeweils eine Schweissfläche (14; 14'; 14") gebildet ist.

14. Vorrichtung (10; 10', 10") gemäss einem der Ansprüche 1 bis 13,
**dadurch gekennzeichnet, dass**
der Sonotrodenkopf (12; 12'; 12") von einem Schwingungserzeuger zu Torsionsschwingungen bezüglich einer Torsionsachse (T) anregbar ist und der Sonotrodenkopf (12; 12'; 12") genau zwei bezüglich der Torsionsachse (T) radiale und einander gegenüberliegende Vorsprünge (22; 22'; 22") aufweist, an deren Enden jeweils eine Schweissfläche (14; 14'; 14") gebildet ist, wobei der Stützbolzen (18; 18'; 18") im Wesentlichen senkrecht zu einer Verbindungslinie (V) verläuft, die die beiden Schweissflächen (14; 14'; 14") miteinander verbindet.

## Claims

1. Apparatus (10; 10'; 10") for welding components by means of ultrasound, comprising
- a sonotrode (11; 11'; 11") with a sonotrode head (12; 12'; 12") which can be excited by an oscillation generator to perform torsional oscillations with regard to a torsion axis (T), at least one welding face (14; 14'; 14") being arranged on the sonotrode head (12; 12'; 12") on the circumferential side with regard to the torsion axis (T),
- a supporting device (15; 15'; 15") which supports the sonotrode head (11; 11'; 11") in a supporting region (16; 16'; 16") which contains an oscillation node of the sonotrode head (12; 12'; 12"),
**characterized in that**
- the sonotrode (11; 11'; 11"; 11''') has a bore (17; 17'; 17"; 17''') which penetrates the supporting region (16; 16'; 16"; 16''') substantially perpendicularly with respect to the torsion axis (T),
- the supporting device (15; 15'; 15"; 15''') comprises a supporting bolt (18; 18'; 18"; 18''') which runs through the bore (17; 17'; 17"; 17''') and supports the sonotrode (11; 11'; 11"; 11''') in the bore (17; 17'; 17"; 17''') in the supporting region (16; 16'; 16"; 16'''),
- the supporting region (16; 16'; 16") and the welding face (14; 14'; 14") run at least partially in a common plane (E) which extends perpendicularly with respect to the torsion axis (T), and
- the supporting region (16; 16'; 16") forms only an inner (with regard to the torsion axis (T)) region of the sonotrode head (12; 12'; 12").

2. Apparatus (10; 10'; 10"; 10''') according to Claim 1,
**characterized in that**
the supporting bolt (18; 18'; 18"; 18''') supports the sonotrode (11; 11'; 11"; 11''') in the supporting region (16; 16'; 16"; 16''') in the bore (17; 17'; 17"; 17''') by way of transition fit, shrink fitting or pressing in.

3. Apparatus (10; 10'; 10"; 10''') according to either of Claims 1 and 2,
**characterized in that**
the supporting bolt (18; 18'; 18"; 18''') intersects the torsion axis (T).

4. Apparatus (10; 10'; 10") according to one of Claims 1 to 3,
**characterized in that**
the bore (17; 17'; 17") tapers in the direction of the supporting region (16; 16'; 16").

5. Apparatus (10; 10'; 10") according to one of Claims 1 to 4,
**characterized in that**
the supporting bolt (18; 18'; 18") widens in the direction of a central region (24; 24'; 24"), in which the supporting bolt (18; 18'; 18") supports the sonotrode head (11; 11'; 11").

6. Apparatus (10; 10'; 10") according to one of Claims 1 to 5,
**characterized in that**
the length of the supporting region (16; 16'; 16") along the supporting bolt (18; 18'; 18") is between 10 % and 30 %, preferably between 20 % and 25 % of the extent of the sonotrode head (12; 12'; 12") along the supporting bolt (18; 18'; 18").

7. Apparatus (10; 10'; 10") according to one of Claims 1 to 6,
**characterized in that**
the supporting bolt (18; 18'; 18") has two ends (20; 20'; 20") which lie opposite one another and are received in a respective bearing opening (29; 29'; 29").

8. Apparatus (10; 10'; 10") according to Claim 7,
**characterized in that**
it comprises an, in particular, single-piece bearing block (23; 26'; 26") which forms the two bearing openings (29; 29'; 29") at least partially.

9. Apparatus (10; 10'; 10") according to Claim 8,
**characterized in that**
it comprises a pressure apparatus for generating forces (K) which act substantially perpendicularly with respect to the torsion axis (T) on the bearing block (23; 26'; 26"), as a result of which the welding face (14; 14'; 14") can be pressed onto a first component which is to be connected to a second component.

10. Apparatus (10"; 10''') according to one of the preceding claims,
**characterized in that**
the supporting device (15"; 15''') has a temperature control device for controlling the temperature, in particular for cooling or for heating, of the sonotrode head (12", 12'''), the temperature control device comprising at least one temperature control feed line for a temperature medium, which temperature control feed line is routed through the supporting device (15"; 15'''), and at least one temperature control element which is operatively connected to the temperature control feed line and is preferably arranged in the region of a welding face (14"; 14''') of the sonotrode head (12", 12''').

11. Apparatus (10"; 10''') according to Claim 10,
**characterized in that**
the temperature control feed line comprises at least one feed duct (31"; 31'''), through which a temperature control fluid can be introduced into the sonotrode head (12", 12''') or can be discharged from the sonotrode head (12", 12'''), and the temperature control element comprises at least one temperature control duct for the temperature control fluid, which temperature control duct is connected fluidically to the feed duct (31"; 31''').

12. Apparatus (10"; 10''') according to Claim 11,
**characterized in that**
the supporting bolt (18"; 18''') comprises the feed duct (31"; 31'''), and the feed duct (31"; 31''') opens at openings (32", 33") which are arranged at ends (20"; 20''') of the supporting bolt (18"; 18''') which lie opposite one another.

13. Apparatus (10; 10'; 10") according to one of the preceding claims,
**characterized in that**
the sonotrode head (12; 12'; 12") can be excited by an oscillation generator to perform torsional oscillations with regard to a torsion axis (T), and the sonotrode head (12; 12'; 12") has at least one, preferably a plurality of projections (22; 22'; 22") which are radial with regard to the torsion axis (T) and at the ends of which in each case one welding face (14; 14'; 14") is formed.

14. Apparatus (10; 10'; 10") according to one of Claims 1 to 13,
**characterized in that**
the sonotrode head (12; 12'; 12") can be excited by an oscillation generator to perform torsional oscillations with regard to a torsion axis (T), and the sonotrode head (12; 12'; 12") has precisely two projections (22; 22'; 22") which are radial with regard to the torsion axis (T), lie opposite one another, and at the ends of which a respective welding face (14; 14'; 14") is formed, the supporting bolt (18; 18'; 18") running substantially perpendicularly with respect to a connecting line (V) which connects the two welding faces (14; 14'; 14") to one another.

## Revendications

1. Dispositif (10 ; 10' ; 10") de soudage de pièces par ultrasons, comportant
- une sonotrode (11 ; 11' ; 11") dotée d'une tête de sonotrode (12 ; 12' ; 12"), laquelle peut être excitée par un générateur de vibrations pour produire des vibrations torsionnelles par rapport à un axe de torsion (T), au moins une surface de soudage (14 ; 14' ; 14") étant disposée sur la tête de sonotrode (12 ; 12' ; 12") du côté périphérique par rapport à l'axe de torsion (T),
- un dispositif de support (15 ; 15' ; 15"), lequel supporte la tête de sonotrode (11 ; 11' ; 11") dans une région de support (16 ; 16' ; 16'') qui contient un nœud de vibration de la tête de sonotrode (12 ; 12' ; 12"),
**caractérisé en ce que**
- la sonotrode (11 ; 11' ; 11" ; 11''') comprend un alésage (17 ; 17' ; 17" ; 17'''), lequel traverse la région de support (16 ; 16' ; 16" ; 16''') sensiblement perpendiculairement à l'axe de torsion (T),
- le dispositif de support (15 ; 15' ; 15" ; 15''') comporte un axe de support (18 ; 18' ; 18" ; 18''') s'étendant à travers l'alésage (17 ; 17' ; 17" ; 17'''), lequel axe de support supporte la sonotrode (11 ; 11' ; 11", 11''') dans la région de support (16 ; 16' ; 16" ; 16''') dans l'alésage (17 ; 17' ; 17" ; 17'''),
- la région de support (16 ; 16' ; 16") et la surface de soudage (14 ; 14' ; 14") s'étendent au moins partiellement dans un plan commun (E) qui s'étend perpendiculairement à l'axe de torsion (T), et
- la région de support (16 ; 16' ; 16") forme seulement une région, intérieure par rapport à l'axe de torsion (T), de la tête de sonotrode (12 ; 12' ; 12").

2. Dispositif (10 ; 10' ; 10" ; 10''') selon la revendication 1,
**caractérisé en ce que**
l'axe de support (18 ; 18' ; 18" ; 18''') supporte la sonotrode (11 ; 11' ; 11" ; 11''') dans la région de support (16 ; 16' ; 16" ; 16''') dans l'alésage (17 ; 17' ; 17" ; 17''') par le biais d'un ajustement de transition, d'un retrait ou d'un enfoncement.

3. Dispositif (10 ; 10' ; 10" ; 10''') selon la revendication 1 ou 2,
**caractérisé en ce que**
l'axe de support (18 ; 18' ; 18" ; 18''') croise l'axe de torsion (T) .

4. Dispositif (10 ; 10' ; 10") selon l'une des revendications 1 à 3,
**caractérisé en ce que**
l'alésage (17 ; 17' ; 17") se rétrécit dans la direction de la région de support (16 ; 16' ; 16").

5. Dispositif (10 ; 10' ; 10") selon l'une des revendications 1 à 4,
**caractérisé en ce que**
l'axe de support (18 ; 18' ; 18") s'élargit dans la direction d'une région centrale (24 ; 24' ; 24") dans laquelle l'axe de support (18 ; 18' ; 18") supporte la tête de sonotrode (11 ; 11' ; 11").

6. Dispositif (10 ; 10', 10") selon l'une des revendications 1 à 5,
**caractérisé en ce que**
la longueur de la région de support (16 ; 16' ; 16") le long de l'axe de support (18 ; 18' ; 18") est comprise entre 10 % et 30 %, de préférence entre 20 % et 25 % de l'étendue de la tête de sonotrode (12 ; 12' ; 12") le long de l'axe de support (18 ; 18' ; 18").

7. Dispositif (10 ; 10' ; 10") selon l'une des revendications 1 à 6,
**caractérisé en ce que**
l'axe de support (18 ; 18' ; 18") comprend deux extrémités opposées (20 ; 20' ; 20") qui sont logées dans respectivement une ouverture de palier (29 ; 29' ; 29").

8. Dispositif (10 ; 10' ; 10") selon la revendication 7,
**caractérisé en ce**
**qu'**il comporte un bloc de palier (23 ; 26' ; 26") en particulier d'un seul tenant, lequel forme au moins partiellement les deux ouvertures de palier (29 ; 29' ; 29").

9. Dispositif (10 ; 10' ; 10") selon la revendication 8,
**caractérisé en ce**
**qu'**il comporte un dispositif de pression servant à produire des forces (K) agissant sensiblement perpendiculairement à l'axe de torsion (T) sur le bloc de palier (23 ; 26' ; 26"), de sorte que la surface de soudage (14 ; 14' ; 14") puisse être pressée contre une première pièce à relier à une deuxième pièce.

10. Dispositif (10" ; 10''') selon l'une des revendications précédentes,
**caractérisé en ce que**
le dispositif de support (15" ; 15''') comprend un dispositif de thermorégulation pour la thermorégulation, en particulier pour refroidir ou pour chauffer la tête de sonotrode (12", 12'''), le dispositif de thermorégulation comportant au moins une amenée de thermorégulation guidée à travers le dispositif de support (15" ; 15''') pour un milieu de thermorégulation et au moins un élément de thermorégulation relié fonctionnellement à l'amenée de thermorégulation, lequel est disposé de préférence dans la région d'une surface de soudage (14" ; 14''') de la tête de sonotrode (12", 12''').

11. Dispositif (10" ; 10''') selon la revendication 10,
**caractérisé en ce que**
l'amenée de thermorégulation comporte au moins un canal d'amenée (31" ; 31'''), au moyen duquel un fluide de thermorégulation peut être introduit dans la tête de sonotrode (12", 12''') ou peut être évacué de la tête de sonotrode (12", 12'''), et l'élément de thermorégulation comporte au moins un canal de thermorégulation pour le fluide de thermorégulation, lequel canal de thermorégulation est relié fluidiquement au canal d'amenée (31" ; 31''').

12. Dispositif (10" ; 10''') selon la revendication 11,
**caractérisé en ce que**
l'axe de support (18" ; 18''') comprend le canal d'amenée (31" ; 31''') et le canal d'amenée (31" ; 31''') débouche au niveau d'ouvertures (32", 33") qui sont disposées à des extrémités opposées (20" ; 20''') de l'axe de support (18" ; 18''').

13. Dispositif (10 ; 10' ; 10") selon l'une des revendications précédentes,
**caractérisé en ce que**
la tête de sonotrode (12 ; 12' ; 12") peut être excitée par un générateur de vibrations pour produire des vibrations torsionnelles par rapport à un axe de torsion (T) et la tête de sonotrode (12 ; 12' ; 12") comprend au moins une, de préférence plusieurs, saillies (22 ; 22' ; 22") radiales par rapport à l'axe de torsion (T), aux extrémités desquelles est formée respectivement une surface de soudage (14 ; 14' ; 14").

14. Dispositif (10 ; 10', 10") selon l'une des revendications 1 à 13,
**caractérisé en ce que**
la tête de sonotrode (12 ; 12' ; 12") peut être excitée par un générateur de vibrations pour produire des vibrations torsionnelles par rapport à un axe de torsion (T) et la tête de sonotrode (12 ; 12' ; 12") comprend exactement deux saillies (22 ; 22' ; 22") radiales et opposées l'une à l'autre par rapport à l'axe de torsion (T), aux extrémités desquelles est formée respectivement une surface de soudage (14 ; 14' ; 14"), l'axe de support (18 ; 18' ; 18") s'étendant sensiblement perpendiculairement à une ligne de liaison (V) qui relie l'une à l'autre les deux surfaces de soudage (14 ; 14' ; 14").
